# EUROPEAN PATENT APPLICATION

(11) **EP 4 837 759 A1**
(43) Date of publication of application: **11.11.2026**
(21) Application number: 26176151.4
(22) Date of filing: 04.05.2026
(51) Int. Cl.: B60J 10/75, B60J 10/16, B60J 10/21, B60J 10/235

(54) **VEHICLE WEATHERSTRIP AND METHOD OF PRODUCING THE SAME**

(30) Priority: 05.05.2025 US 202519198625
(71) Applicant: Hutchinson Sealing Systems, Inc., Auburn Hills, MI 48326 (US)
(72) Inventor: GUELLEC, André, Bloomfield Hills, MI 48302 (US); PARK, Yongpil, West Bloomfield, MI 48323 (US); MARTIN, Jeffrey, Howell, MI 48843 (US); CORNWELL, George, Ira Township, MI 48023 (US); KWIATOS, Marek, 39-200 DEBICA (PL)
(74) Representative: Gevers & Orès

(57) **Abstract**

A weatherstrip for a vehicle, said weatherstrip comprising:
- a first part which is made by bi-injection,
- a second part which is made by co-extrusion,

wherein said first part includes a first bent portion resulting from said bi-injection,
wherein said second part includes a second bent portion obtained by bending said second part after co-extrusion,
said second bent portion including at least one slot so as to facilitate said bending without cracks or breaks.

## Description

### TECHNICAL FIELD

The invention relates to a weatherstrip for a vehicle and a method of producing said weatherstrip.

### BACKGROUND OF THE INVENTION

A weatherstrip for a vehicle is a strip which is intended to provide sealing, for example against water and dust. The strip is carried by a first element and is intended to cooperate in a sealed manner with at least one other element such as, for example, a fixed or moving window of the vehicle, in order to prevent the intrusion of water and dust between both elements.

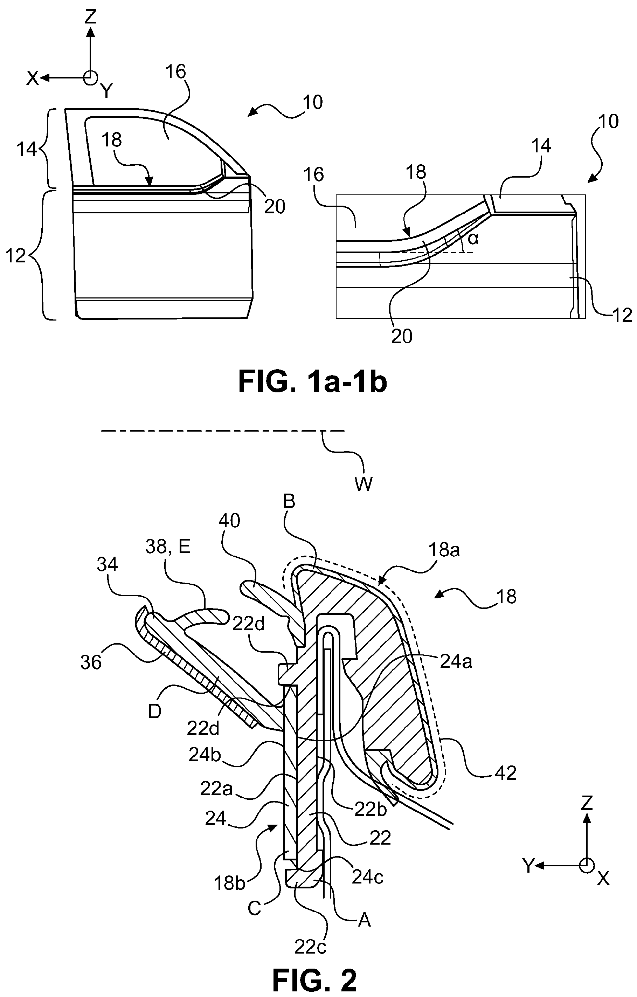

Figure 1a shows a lateral door 10 of a vehicle, and in particular a front lateral door of a vehicle.

The door 10 comprises a lower frame 12 and an upper frame 14. The upper frame 14 has a general inverted U shape and defines with the frame 12 a space closed by a window pane 16.

The window pane 16 is movable and can be moved from a high position in which it occupies the space of the frame 14 to a low position in which it is housed in the frame 12.

The door 10 comprises a weatherstrip 18 carried by the lower frame 12 and intended to cooperate with the window pane 16 in order to provide sealing between the window 16 and the frame 12.

The weatherstrip 18 is for instance an outer belt (or outer waistline) weatherstrip.

The weatherstrip 18 has an elongated shape along a first axis X which is a horizontal axis extending from the front to the rear of the vehicle. The weatherstrip 18 is therefore substantially horizontal. In the XYZ coordinate frame, the axis Y is a transverse axis which extends towards the vehicle from one side to the opposite side of the vehicle, and the axis Z is a vertical axis extending from the bottom to the top.

In most of the cases, the weatherstrip 18 is rectilinear and is quite easy to produce either co-extrusion or by bi-injection or co-injection

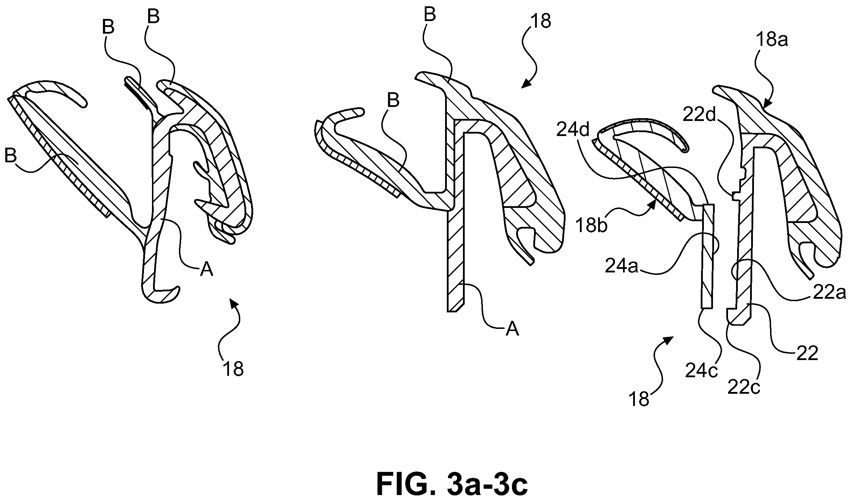

Figure 3a shows for instance a weatherstrip 18 that is fully produced by co-extrusion. The weatherstrip 18 is made of a single part made in one piece with at least two different materials A and B.

Figure 3b shows for instance a weatherstrip 18 that is fully produced by bi-injection. The weatherstrip 18 is made of a single part made in one piece with at least two different materials A and B.

However, depending on the design of the weatherstrip 18, it is not always possible to produce the weatherstrip 18 only by bi-injection or co-extrusion. As shown in figures 2 and 3c, a solution consists therefore in producing a first part 18a of the weatherstrip 18 by bi-injection, a second part 18b of the weatherstrip 18 by co-extrusion, and then to secure both first and second parts 18a, 18b together.

The first part 18a that is produced by bi-injection may have any shape resulting from the bi-injection. Indeed, the shape of the first part 18a depends on the shape of the mold (an in particular of the cavity of the mold) so the mold is designed and selected according to the desired shape of the first part 18a.

On the contrary, the second part 18a that is produced by co-extrusion has necessarily a rectilinear shape due to the fact that it is produced by extrusion from an extrusion die.

As shown in figures 1a-1b, the weatherstrip 18 is not necessarily strictly rectilinear and may comprise a bent portion 20 so as to conform for instance with the shape of an upper edge of the frame 12.

When the weatherstrip 18 is fully made by co-injection, this kind of bent portion 20 may result from the bi-injection process by selecting an adequate mold as explained above. However, such a bent portion 20 cannot result from a co-extrusion process. Therefore, in case where the weatherstrip 18 has to be produced in two parts 18a and 18b as shown in figures 2 and 3c, there is a need to facilitate the producing and securing of both parts 18a, 18b. For instance, when the weatherstrip 18 is produced, there is a risk that breaks or cracks appear onto the co-extruded second part 18b if it is bent to adopt the shape of the first part 18a.

The invention proposes a solution to this technical problem, which is simple, effective and economical.

### PRESENTATION OF THE INVENTION

The invention proposes a weatherstrip for a vehicle according to claim 1

The weatherstrip comprises:
- a first part which has at least in part an elongated shape along a first axis and which is made by bi-injection, said first part comprising a first plate which is parallel to said first axis and which is made of a first material, said first part comprising at least one member made of a second material that is softer than the first material and that is bi-injected with said first material during said bi-injection, said first plate having a first connecting face,
- a second part which has at least in part an elongated shape along said first axis and which is made by co-extrusion, said second part comprising a second plate which is parallel to said first axis and which is made of a third material, said second part comprising at least one lip made of a fourth material that is softer than the third material and that is co-extruded with said third material during said co-extrusion, said second plate having a second connecting face that is applied and secured onto said first connecting face, wherein said first part includes a first bent portion about a second axis that is perpendicular to the first axis and to the first and second connecting faces, said first bent portion having a bent shape resulting from said bi-injection, wherein said second part includes a second bent portion about said second axis, said second part having a rectilinear shape resulting from said co-extrusion and being bent afterwards so as to form said second bent portion, said second bent portion including at least one slot formed in said second plate, said at least one slot extending from a first longitudinal edge of said second plate towards a second longitudinal edge of said second plate, said first and second longitudinal edges being at least in part parallel and extending at least in part along said first axis, and said second longitudinal edge being located between said first longitudinal edge and said second axis. The slot(s) is/are performed in the second part so as to facilitate the bending of this second part and avoid any cracks or breaks, and avoid using more expensive secondary processes like heat-forming or stretch-bending. The slot(s) is/are indeed useful to render the second part more flexible and to allow its bending without inducing stresses into the second part that might lead to cracks or breaks.

Moreover, the slots are located in an area of the weatherstrip which is hidden when the weatherstrip is mounted in a vehicle. So, the slots do not have impact on the esthetical appearance of the weatherstrip.

The weatherstrip according to the invention may comprise one or more of the following features, taken separately from one another or in combination with one another:
- said at least one slot has a height which represents more than 30% of a total height of the second plate, said total height being measured between said first and second longitudinal edges;
   -- said at least one slot has a height which represents more than 50% or 80% of the total height of the second plate, or is equal to 50% or 80% of the total height of the second plate;
   -- said at least one slot has a height which represents less than 90% or 80% of a total height of the second plate, or is equal to 90% or 80% of the total height of the second plate;
   -- said at least one slot is a rectilinear slot;
- said at least one slot is a keyhole slot;
   -- said at least one slot is shaped such as a zig-zag, a curve or any shape to prevent tearing during the bend; other design like a rectangular shape with rounded corners may work as well;
- said at least one slot includes a plurality of slots that are spaced one from another along said first axis;
   -- the slots are regularly or non-regularly spaced along said first axis;
   -- said plurality of slots includes a number of slots higher than 2 or 3;
   -- the number of slots is higher than or equal to 5 or 8;
- said first plate comprises at least one indexing protrusion that protrudes from said first connecting face and that passes through at least one opening of said second plate;
- said at least one opening is a hole remote from said first and second longitudinal edges;
- said at least one indexing protrusion includes two or more indexing protrusions distributed along said first axis;
   -- said at least one opening is U-shaped or V-shaped and extends from said first longitudinal edge;
   -- said second plate is secured onto said first plate by welding, gluing or any other attachment process;
   -- said second plate is secured onto said first plate by welding spots or beads;
   -- said at least one slot includes a plurality of slots, and said at least some of said welding spots or beads are located between two adjacent slots of said plurality of slots;
- said first longitudinal edge is suitable to come into abutment against a first ridge of said first plate, and/or said second longitudinal edge is suitable to come into abutment against a second ridge of said first plate;
- said second part includes a slip coating that is located onto said at least one lip and that is made of a fifth material, said fifth material being co-extruded with said third and fourth materials during said co-extrusion;
   -- said at least one slot has a width of at least one millimeter (+/-10%), said width being measured along said first axis;
   -- said slots have a height of at least five millimeters (+/-10%), and preferably ten millimeters (+/-10%);
   -- the first material is or includes polypropylene (PP) and may include additives such as for instance: talc, fibers such as glass fibers, etc.;
   -- the third material is or includes thermoplastic such as polypropylene (PP) and may further include TPV and/or TPES), the third material may further include additives such as for instance: talc, fibers such as glass fibers, etc.;
   -- the first and third materials are identical or similar; they may comprise the same basic component such as polypropylene (PP) and may differ one from the other by their additives, their viscosity, etc.;
   -- the second material is or includes TPV, TPS, and may include additives such as for instance: talc, fibers such as glass fibers, etc.;
   -- the fourth material is or includes TPV, TPS, and may include additives such as for instance: talc, fibers such as glass fibers, etc.;
   -- the second and fourth materials are identical or similar; they may comprise the same basic component such as polypropylene (PP) and may differ one from the other by their additives, their viscosity, etc.;
   -- said second part includes a flock tape;
   -- said flock tape is applied during the co-extrusion step;
   -- said flock tape is located onto said at least one lip of said second part,
   -- said slip layer is or includes PP, PEHD, PUHD, or TPE;
   -- said weatherstrip further includes a longitudinal capping which is fastened onto said at least one lip of said first part;
   -- said at least one lip includes a sealing lip and/or a lip having an esthetical appearance;
   -- said connecting face is located between said first and second ridges;
   -- said first ridge is a longitudinal ridge extending continuously or discretely along said first axis;
   -- said second ridge is a local or discrete ridge or includes local or discrete ridges.

The present invention further relates to a method of producing the weatherstrip as described above, wherein said method comprises the followings steps:
a) producing said first part by said bi-injection,
b) producing said second part by said co-extrusion,
c) providing said second plate with said slots,
d) bending said second plate about said second axis and applying said second plate onto said first plate, and
e) securing said second plate onto said first plate.

The method according to the invention may comprise one or more of the following features and/or steps, taken separately from one another or in combination with one another:
- said slots at step c) are formed by punching, drilling or cutting said second plate;
   -- said bending at step d) is performed at an angle included in the range [2°, 50°];
   -- the range is [5°, 40°];
   -- said bending at step d) is performed at a radius included in [50mm, 1000mm];
   -- the range is [100mm, 300mm];
- the method comprises, during step d), an engagement of at least one indexing protrusion located on said first connecting face into an opening of said second plate;
   -- said engagement is performed by moving said first part to said second part along said second axis;
- the method comprises, during step d), the abutment of said first longitudinal edge against a first ridge of said first plate, and/or the abutment of said second longitudinal edge against a second ridge of said first plate;
- the method comprises, between the steps d) and e), a step i) of maintaining by clamping said second plate onto said first plate;
- said second part is oversized in length at the end of step b) so as to comprise additional ends, said second part being cut during step c) so as to eliminate said additional ends;
   -- said securing at step e) is performed by welding, gluing or any other attachment process;
   -- said welding is preferably performed by ultrasonic spot welding or vibration welding.

### BRIEF DESCRIPTION OF THE DRAWINGS

The invention will be better understood and other details, characteristics and advantages of the invention will become apparent on reading the following description given by way of non-limiting example and with reference to the appended drawings, in which:
figures 1a-1b are schematic views of a lateral door of a vehicle, this door carrying a weatherstrip according to the invention,
figure 2 is a cross sectional schematic view of a weatherstrip according to the invention,
figures 3a-3c are cross sectional schematic views of various weatherstrips, the weatherstrip of figure 3c including two parts that are fastened together to produce the weatherstrip of figure 2,
figure 4 is a partial and perspective schematic view of a weatherstrip according to a first embodiment of the invention,
figure 5 is an enlarged schematic view of the weatherstrip of figure 4,
figure 6 is a schematic view showing slots of the weatherstrip of figure 4,
figures 7 is a cross sectional schematic view of a weatherstrip according to another embodiment of the invention,
figure 8 is a partial and perspective schematic view of the weatherstrip of figure 7, and
figure 9 is an enlarged schematic view of one of the parts of the weatherstrip of figure 7, before fastening this part to another part.

### DETAILED DESCRIPTION

Figures 1a-1b show a vehicle door 10 that can be provided with a weatherstrip 18 according to the invention.

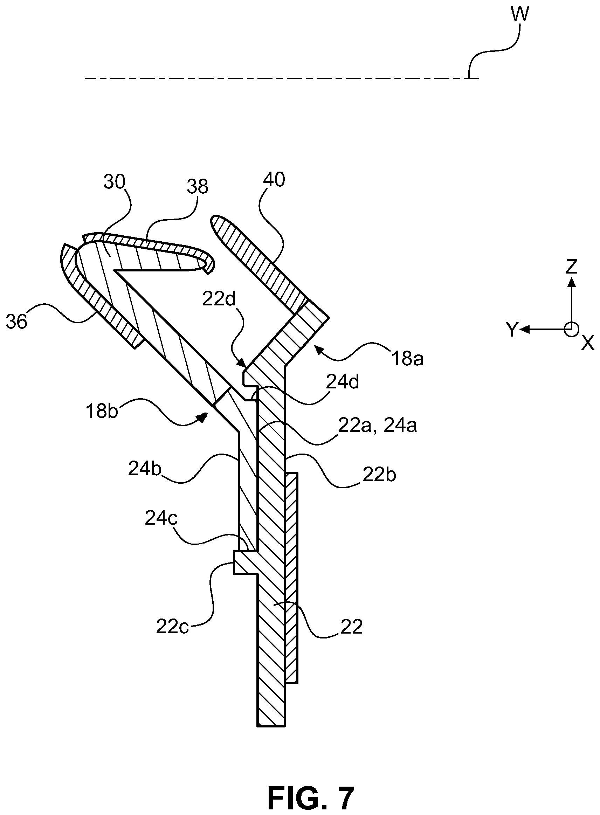

Figures 2, 3c and 4-6 show a first embodiment of the weatherstrip 18 and figures 7 to 9 show a second embodiment of the weatherstrip 18.

The weatherstrip 18 is made of two parts 18a, 18b that are secured together. One of these parts is called the first part 18a and is produced by bi-injection. The other of these parts is called the second part 18b and is produced by co-extrusion.

### Both first and second parts 18a, 18b have an elongated shape along a first axis which is the longitudinal axis of the weatherstrip 18 and which is the axis X in the coordinate system of figure 1a.

As best shown in figures 2 and 3c, the first part 18a comprises a first plate 22 which is parallel to axis X and which is made of a first material A.

Said first part 18a further comprises at least one member 40 which is made of a second material B that is softer than the first material A.

Said member 40 may be a lip or may include a lip. Said member may carry a longitudinal capping 42 as shown in dashed lines in figure 2.

The first material A may be or may include polypropylene (PP) and may further include additives such as for instance: talc, fibers such as glass fibers, etc.

The second material B may be or may include TPV, TPS and may further include additives such as for instance: talc, fibers such as glass fibers, etc. Both first and second materials A, B are bi-injected during a bi-injection process for producing the first part 18a.

Bi-injection means that two injections steps occur successively, i.e., one after the other, during the process. One of the material, such as the first material A, is injected into a mold and the other material, such as the second material B, is injected into the mold. The mold may be adapted after the first injection and before the second injection.

The first plate 22 has two opposite faces 22a, 22b. The face 22a is a first connecting face that is used to connect and fasten the first part 18a to the second part 18b. The member 40 may be linked to at least one of the faces 22a, 22b as shown in the figures.

The second part 18b comprises a second plate 24 which is parallel to axis X and which is made of a third material C.

Said second part 18b further comprises at least one lip 34, such as a sealing lip or a lip having an esthetical appearance, which is made of a fourth material D that is softer than the third material C.

The third material C may be or may include thermoplastic such as polypropylene (PP) and may further include TPV and/or TPES. The third material C may further include additives such as for instance: talc, fibers such as glass fibers, etc.

The first and third materials A, C may be identical or similar. They may comprise the same basic component such as polypropylene (PP) and may differ one from the other by their additives, their viscosity, etc.

The fourth material D may be or may include TPV, TPS, and may further include additives such as for instance: talc, fibers such as glass fibers, etc. The second and fourth materials B, D may be identical or similar. They may comprise the same basic component such as TPV or TPS and may differ one from the other by their additives, their viscosity, etc.

Both third and fourth materials C, D are co-extruded during a co-extrusion process.

Co-extrusion means that both third and fourth materials C, D are extruded from an extrusion die.

The second plate 24 has two opposite faces 24a, 24b. The face 24a is a second connecting face that is used to connect and fasten the second part 18b to the first part 18a. The lip 34 may be linked to the face 24b as shown in the figures.

The second part 18b may include a flock tape 36. More particularly, the lip 34 may be covered at least in part with flock material as for instance a flock tape 36.

Said flock tape 36 may be applied to the lip 34 during the co-extrusion process, for instance when the second part 18b is extruded from the extrusion die.

The second part 18b may include a slip coating 38. The slip coating 38 is for instance located onto said at least one lip 34. The slip coating 38 is preferably made of a fifth material E.

Said fifth material E may be co-extruded with said third and fourth materials C, D during said co-extrusion process.

Said slip coating 38 may be or may include PP, PEHD, PUHD, or TPE.

The second plate 24 further includes two opposite longitudinal edges 24c, 24d. Both edges 24c, 24d are at least in part parallel and extend at least in part along said axis X. One of these longitudinal edges is called the first longitudinal edge 24c and is a lower longitudinal edge in the example shown. The other of these longitudinal edges is called the second longitudinal edge 24d and is an upper longitudinal edge in this example.

As shown in the figures, the lip 26 may be linked to the second plate 24 close to the second longitudinal edge 24d.

The first longitudinal edge 24c may be suitable to come into abutment against a first ridge 22c of said first plate 22, and/or the second longitudinal edge 24d may be suitable to come into abutment against a second ridge 22d of said first plate 22. The abutment of the edge(s) 24c, 24d against the ridge(s) 22c, 22d may be useful to accurately position the plates 22, 24 together.

In the example shown, we can see that the face 22a is delimited by said ridges 22c, 22d which extends below and above the face 22a. In other words, the face 22a is located between the ridges 22c, 22d.

The ridges 22c, 22d may be longitudinal ridges and may extend continuously along said axis X. In variant, the ridges 22c, 22d may each be a local or discrete ridge or may include local or discrete ridges.

As shown in figures 1a-1b and figures 4-5, said first part 18a includes a first bent portion 20a about a second axis W that is perpendicular to the axis X and which can be considered as an axis parallel to the transverse axis Y of the coordinate system of figure 1.

The axis W is also perpendicular to the first and second connecting faces 22a, 24a.

Said first bent portion 20a has a bent shape which results from the bi-injection process as explained above.

Said second part 18b includes a second bent portion 20b about said axis W. However, said second part 18b has a rectilinear shape resulting from the co-extrusion process. So, the second part 18b has to be bent afterwards (once co-extruded) so as to form said second bent portion 20b.

According to the invention, said second bent portion 20b includes at least one slot 26 which is formed in said second plate 24 so as to render this plate more flexible and allows bending of this plate and of the second part 18b more easily without cracking or breaking.

Said slots 26 may be formed by punching, drilling or cutting said second plate 24.

Said at least one slot 26 extends from the first longitudinal edge 24c towards the second longitudinal edge 24d.

Figures 2 show that the second longitudinal edge 24d is located between the first longitudinal edge 24c and the bending axis W.

The number of slots 26 may be one, two, three, etc. The number of slots 26 may therefore be considered as higher than 2, 3, 5, 8 or even more. The number of slots 26 is selected for instance according to the length of the bent portion 20b and to the curvature radius of this bent portion 20b.

The slots 26 are preferably spaced one from another along the axis X. The slots 26 can be regularly or non-regularly spaced along the axis X.

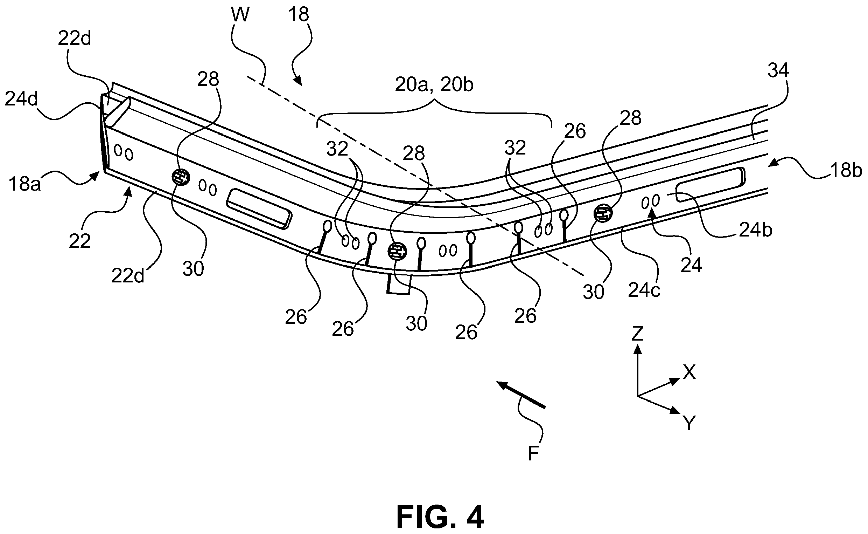

In the example shown in figures 4-5, the number of slots 26 is six and they are quite regularly spaced one from another.

Each slot 26 may have any shape. The slots 26 may have the same shape or design or may have various shapes and designs.

Each slot 26 may for instance be rectilinear.

In the example shown in figures 4-6, each slot 26 is shaped as a keyhole.

In other embodiments, each slot 26 may be shaped such as a zig-zag, a curve or any shape to prevent tearing during the bend. Other design like a rectangular shape with rounded corners may work as well.

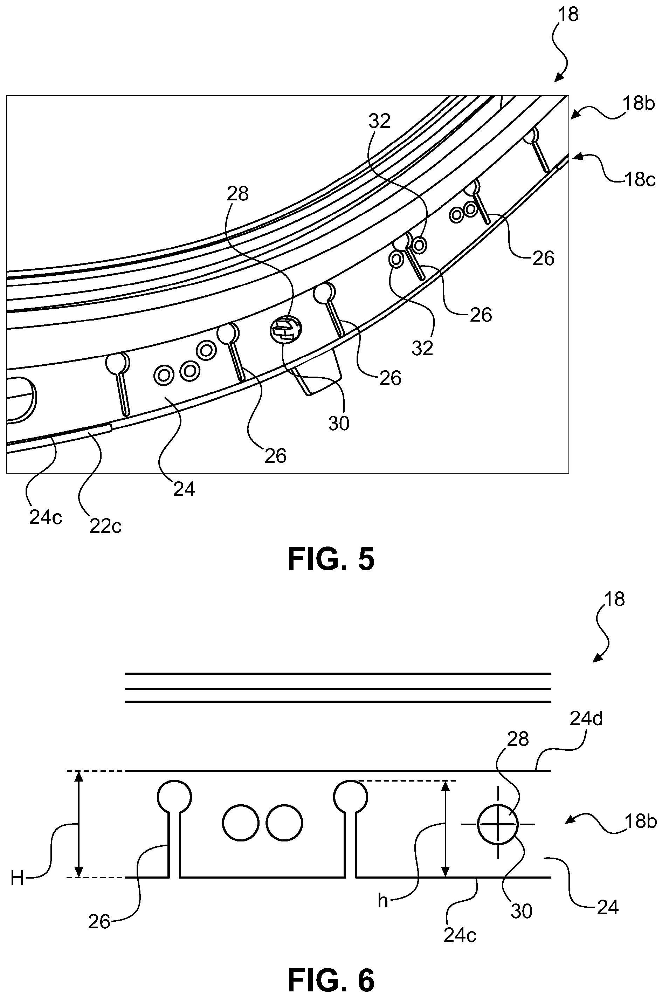

As shown in figures 4 and 6, the first plate 22 comprises preferably at least one indexing protrusion 28 that protrudes from said first connecting face 22a and that passes through at least one opening 30 of said second plate 24.

In the example shown, each opening 30 is a hole remote from said first and second longitudinal edges 24c, 24d.

The number of indexing protrusions 28 may be of one, two, three or more. They are preferably distributed along the axis X and may be regularly or non-regularly spaced one from another.

In figure 4, we can see that the number of protrusions 28 is three. The number of openings 30 is equal to the number of protrusions 28 and is also three. One of the openings 30 are preferably designed to provide a snug fit to the associated protrusion 28 and create a 4-way locator (up/down and fore/aft). The other opening(s) can be designed to only be up/down locator(s).

The embodiment of figures 7 to 9 comprises most of the features described in relation with the first embodiment of figures 4 to 6. The description of the embodiment of figures 4 to 6 applies therefore to the embodiment of figures 7 to 9.

One of the differences between both embodiments relates to the shape of the slots 26. The slots 26 in figures 7 to 9 are in the shape of slits since they are narrower and rectilinear.

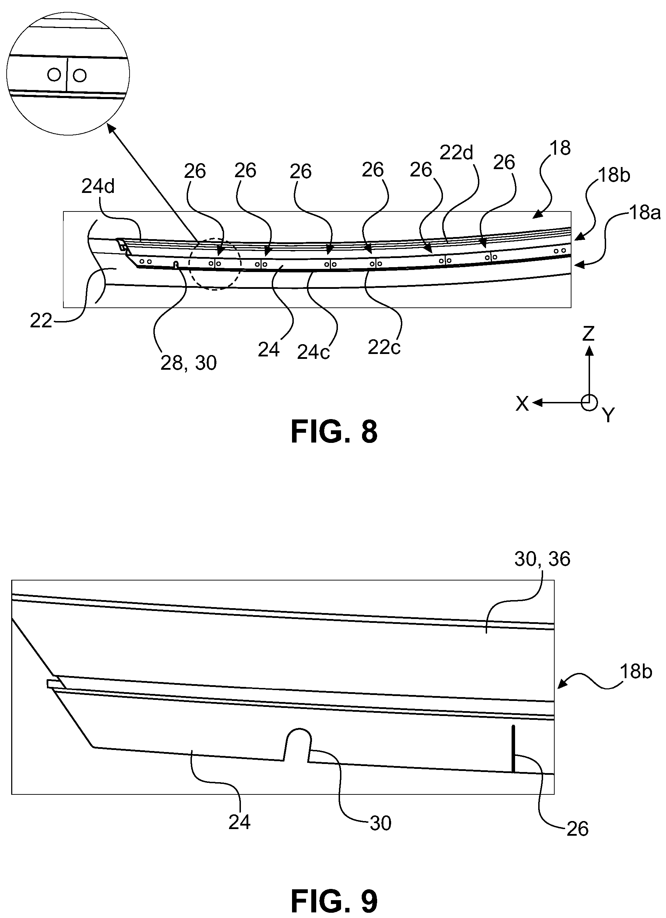

Another difference between both embodiments relates to the shape of the openings 30. The or each opening 30 in figures 7 to 9 is U-shaped or V-shaped and extends from said first longitudinal edge 24c (figure 9).

In both embodiments, each slot 26 has a height h which represents preferably more than 30% of a total height H of the second plate 24 (see figure 6), said total height H being measured between said edges 24c, 24d. Each slot 26 may have a height h which represents more than 50% or 80% of the total height H or may be equal to 50% or 80% of the total height H.

Each slot 26 may have a height h which represents less than 90% or 80% of the total height H or may be equal to 90 or 80% of the total height H.

Each slot 26 may have a height h of at least five millimeters (+/-10%), and preferably ten millimeters (+/-10%).

Each slot 26 may have a width of at least one millimeter (+/-10%), said width being measured along said axis X.

Each slot 26 may have a width L in a range [0,5mm; 3mm], and preferably [1mm; 2mm].

Each slot 26, and in particular each keyhole slot 26, may have a free end having a circular shape with a diameter in the range [1mm; 6mm], and preferably [2mm; 5mm].

The second plate 24 may be secured onto the first plate 22 by welding, gluing or any other attachment process.

In case where welding is used, the second plate 24 may be secured onto the first plate 22 by welding spots 32 or beads as shown in figures 4 and 5. Some of said welding spots 32 or beads may be located between two adjacent slots 26 (figure 5).

In another variant, the welding spots 32 or beads may be grouped by pairs of two welding spots 32 or beads, and each such pair of welding spots 32 or beads may be separated one another by one of said slots (figure 4).

The present invention further relates to a method of producing the weatherstrip 18 as described above, wherein said method comprises the followings steps:
a) producing said first part 18a by said bi-injection,
b) producing said second part 18b by said co-extrusion,
c) providing said second plate 24 with said slots 26,
d) bending said second plate 24 about said second axis X and applying said second plate 24 onto said first plate 22, and
e) securing said second plate 24 onto said first plate 22.

During step c), the slots 26 may be formed by punching, drilling or cutting said second plate 24.

During step d), said bending may be performed at an angle α included in the range [2°, 50°], and preferably in the range [5°, 40°] (figure 1b).

During step d), said bending may be performed at a radius included in the range [50mm, 1000mm], and preferably in the range [100mm, 300mm]. During step d), the method may comprise an engagement of the indexing protrusion(s) 28 located on said first connecting face 22a into the opening(s) 30 of said second plate 24. Said engagement may be performed by moving said first part 18a towards said second part 18b along said second axis W (see arrow F in figure 4). This engagement may be sufficient and useful to keep the second part 18b in the bending position onto the first part 18a before the step e) of securing. This is possible for instance with the first embodiment because the openings 30 and protrusions 28 are distributed along the bent portion 20b.

During step d), said first longitudinal edge 24c may come into abutment against the first ridge 22c of said first plate 22, and/or said second longitudinal edge 24d may come into abutment against the second ridge 22d of said first plate 22.

Between steps d) and e), the method may comprise a step i) of maintaining in position both first and second plates 22, 24 one with respect to the other, by clamping together said first and second plates 22, 24. This is particularly useful in the case of the second embodiment so as to keep the second part 18b in the bending position onto the first part 18a before the step e) of securing.

Said second part 18b may be oversized in length at the end of step b) so as to comprise additional ends. Said second part 18b may be cut during step c) so as to eliminate said additional ends and provide for instance specific shapes to these ends. In the example shown in figures 8 and 9, at least one of the ends of the second part 18b is cut so as to have an inclined edge, i.e., an edge which is inclined compared to the longitudinal axis X.

During step e), said securing may be performed by welding, gluing or any other attachment process. Said welding may be performed by ultrasonic spot welding or vibration welding for instance.

The invention provides many advantages such as to simplify and reduce the costs of a weatherstrip having a bent portion and which cannot be produced only by bi-injection.

## Claims

1. A weatherstrip (18) for a vehicle (10), said weatherstrip (18) comprising:
- a first part (18a) which has at least in part an elongated shape along a first axis (X) and which is made by bi-injection, said first part (18a) comprising a first plate (22) which is parallel to said first axis and which is made of a first material (A), said first part (18a) comprising at least one member made of a second material (B) that is softer than the first material and that is bi-injected with said first material during said bi-injection, said first plate (22) having a first connecting face (22a),
- a second part (18b) which has at least in part an elongated shape along said first axis (X) and which is made by co-extrusion, said second part (18b) comprising a second plate (24) which is parallel to said first axis and which is made of a third material (C), said second part (18b) comprising at least one lip (34) made of a fourth material (D) that is softer than the third material and that is co-extruded with said third material during said co-extrusion, said second plate (24) having a second connecting face (24a) that is applied and secured onto said first connecting face (22a),
**wherein** said first part (18a) includes a first bent portion (20a) about a second axis (W) that is perpendicular to the first axis (X) and to the first (22a) and second (24a) connecting faces, said first bent portion (20a) having a bent shape resulting from said bi-injection,
wherein said second part (18b) includes a second bent portion (20b) about said second axis (W), said second part (18b) having a rectilinear shape resulting from said co-extrusion and being bent afterwards so as to form said second bent portion (20b), said second bent portion (20b) including at least one slot (26) formed in said second plate (24), said at least one slot (26) extending from a first longitudinal edge (24c) of said second plate (24) towards a second longitudinal edge (24d) of said second plate (24), said first (24c) and second (24d) longitudinal edges being at least in part parallel and extending at least in part along said first axis, and said second longitudinal edge (24d) being located between said first longitudinal edge (24c) and said second axis.

2. The weatherstrip according to claim 1, wherein said at least one slot (26) has a height (h) which represents more than 30% of a total height (H) of the second plate (24), said total height (H) being measured between said first (24c) and second (24d) longitudinal edges.

3. The weatherstrip according to claim 1 or 2, wherein said at least one slot (26) is a keyhole slot.

4. The weatherstrip according to any one of claims 1 to 3, wherein said at least one slot (26) includes a plurality of slots that are spaced one from another along said first axis.

5. The weatherstrip according to any one of claims 1 to 3, wherein said first plate (22) comprises at least one indexing protrusion (28) that protrudes from said first connecting face (22a) and that passes through at least one opening (30) of said second plate (24).

6. The weatherstrip according to claim 5, wherein said at least one opening (30) is a hole remote from said first (24c) and second (24d) longitudinal edges.

7. The weatherstrip according to claim 5, wherein said at least one indexing protrusion (28) includes two or more indexing protrusions distributed along said first axis.

8. The weatherstrip according to any one of claims 1 to 7, wherein said first longitudinal edge (24c) is suitable to come into abutment against a first ridge (22c) of said first plate (22), and/or said second longitudinal edge (24d) is suitable to come into abutment against a second ridge (22d) of said first plate (22).

9. The weatherstrip according to any one of claims 1 to 8, wherein said second part (18b) includes a slip coating (38) that is located onto said at least one lip (34) and that is made of a fifth material (E), said fifth material being co-extruded with said third and fourth materials during said co-extrusion.

10. A method of producing the weatherstrip according to any of claims 1 to 9, wherein said method comprises the followings steps:
a) producing said first part (18a) by said bi-injection,
b) producing said second part (18b) by said co-extrusion,
c) providing said second plate (24) with said slots,
d) bending said second plate (24) about said second axis and applying said second plate (24) onto said first plate (22), and
e) securing said second plate (24) onto said first plate (22).

11. The method according to claim 10, wherein said slots (26) at step c) are formed by punching, drilling or cutting said second plate (24).

12. The method according to claim 10 or 11, wherein it comprises, during step d), an engagement of at least one indexing protrusion (28) located on said first connecting face (22a) into an opening (30) of said second plate (24).

13. The method according to any one of claims 10 to 12, wherein the method comprises, during step d), the abutment of said first longitudinal edge (24c) against a first ridge (22c) of said first plate (22), and/or the abutment of said second longitudinal edge (24d) against a second ridge (22d) of said first plate (22).

14. The method according to any one of claims 10 to 13, wherein the method comprises, between the steps d) and e), a step i) of maintaining by clamping said second plate (24) onto said first plate (22).

15. The method according to any one of claims 10 to 14, wherein said second part (18b) is oversized at the end of step b) so as to comprise additional ends, said second part (18b) being cut during step c) so as to eliminate said additional ends.
